# EUROPÄISCHE PATENTANMELDUNG

(11) **EP 4 088 843 A1**
(43) Veröffentlichungstag der Anmeldung: **16.11.2022**
(21) Anmeldenummer: 21173890.1
(22) Anmeldetag: 14.05.2021
(51) Int. Cl.: B23B 31/20, B23Q 3/12

(54) **SPANNSYSTEM MIT SPINDEL UND WERKSTÜCKHALTER SOWIE HIERFÜR VORGESEHENE SPINDEL UND WERKSTÜCKHALTER**

(71) Anmelder: Hainbuch GmbH Spannende Technik, 71672 Marbach (DE)
(72) Erfinder: WELLER, Hans-Michael, 71672 Marbach (DE)
(74) Vertreter: Witte, Weller und Partner Patentanwälte mbB Stuttgart

(57) **Zusammenfassung**

Bekannt ist ein Spannsystem mit einer Spindel (10) und einem Werkstückhalter (30), insbesondere zur rotativen Bearbeitung eines in den Werkstückhalter (30) eingespannten Werkstücks. Die Spindel (10) ist zur Anbringung des Werkstückhalters (30) ausgebildet, wobei die Spindel (10) und der Werkstückhalter (30) hierfür über aufeinander zu gerichtete Anlageflächen (14,34) verfügen.

Es wird vorgeschlagen, dass insbesondere an der Spindel eine Kopplungseinrichtung (40) vorgesehen ist, die einen axial verlagerbaren Verbindungsabschnitt (42) zur Ankoppelung an den Werkstückhalter (30) aufweist. Diese Kopplungseinrichtung (40) umfasst weiterhin einen ersten Gewindeabschnitt (60), der axial ortsfest an einem Gehäuse (12) der Spindel (10) vorgesehen ist, und einen zweiten Gewindeabschnitt (62) mit vom ersten Gewindeabschnitt abweichender Gewindesteigung am Verbindungsabschnitt (42). Die Kopplungseinrichtung (40) weist weiterhin eine Differenzgewindehülse (50) auf, an der ein erstes Gegengewinde (64) und ein zweites Gegengewinde (66) vorgesehen sind. Diese Gegengewinde (64,66) befinden sich im Eingriff mit den Gewindeabschnitten (60,62) am Gehäuse (12) und am Verbindungsabschnitt (42).

## Beschreibung

### ANWENDUNGSGEBIET UND STAND DER TECHNIK

Die Erfindung betrifft ein Spannsystem mit einer Spindel und einem Werkstückhalter, insbesondere zur rotativen Bearbeitung eines durch den Werkstückhalter gehaltenen Werkstücks. Der Werkstückhalter eines solchen Spannsystems weist einen Aufnahmebereich zur Aufnahme eines Werkstücks auf. Üblicherweise ist mindestens ein bewegliches Klemmelement vorgesehen, mittels dessen das Werkstück im Aufnahmebereich eingespannt werden kann. Insbesondere ist eine Mehrzahl von Klemmbacken zum Einspannen des Werkstücks vorgesehen. Die Spindel eines gattungsgemäßen Spannsystems ist zur Anbringung des Werkstückhalters vorgesehen, insbesondere um das Werkstück in eine rotative Bewegung zu versetzen, in der die Bearbeitung stattfindet.

Die Spindel und der Werkstückhalterverfügen über aufeinander zu gerichtete Anlageflächen, die im befestigten Zustand des Werkstückhalters aneinander anliegen und die ein in die Spindel eingekoppeltes Drehmoment auf den Werkstückhalter und das dort eingespannte Werkstück übertragen.

Derartige Spannsysteme sind dafür vorgesehen, im betrieblichen Alltag der Fertigung häufig gewechseltzu werden. Werkstückhalter werden je nach Bedarf bei der Fertigungan Spindeln angekoppelt und nach Verwendung wieder von diesen gelöst. Es ist daher erforderlich, derartige Wechsel möglichst schnell und problemlos durchführen zu können und bei Kopplung eine präzise Positionierung des Werkzeughalters an der Spindel gewährleisten zu können.

Aus der DE 102009024481 A1 ist bereits ein Schnellwechselmechanismus bekannt, um ein Spannzeug an einer Spindel zu befestigen. Das Dokument schlägt zu diesem Zweck eine Bajonettverbindung vor. Auch aus der DE 3820871 A1 ist ein Wechselmechanismus bekannt.

Aus derzum Zeitpunkt der Einreichung dieser Anmeldung unveröffentlichten Europäischen Patentanmeldung EP 20205489.6 ist ein Spannsystem bekannt, bei dem an der Spindel und am Werkstückhalterjeweilsein Gewinde mit unterschiedlichen Gewindesteigungen vorgesehen ist. Eine Differenzgewindehülse ist vorgesehen, die jeweils Gewinde beider Gewindesteigungen aufweist und mittels dessen die Spindel und der Werkstückhalter miteinander verbunden sind. Durch eine Rotation dieser Differenzgewindehülse werden die Spindel und der Werkstückhalter miteinander verbunden.

Je nach konkretem Anwendungsfall kann bei dieser Lösung jedoch nachteilig sein, dass der Werksstückhalter und die Spindel mit Gewinden ausgestattet sein müssen und mit der Differenzgewindehülse verbunden sein müssen. Weiterhin ist bei dieser Lösung vorzugweise vorgesehen, dass mindestens eines der Gewinde als Bajonettgewinde gestaltet ist. Dies begrenzt den möglichen Drehwinkel zum Festspannen des Werkstückhalters und erschwert daher dessen Anbringung.

### AUFGABE UND LÖSUNG

Aufgabe der Erfindung ist es, ein Spannsystem zur Verfügung zu stellen, welches robust ist und einfach an einer Spindel angebracht werden kann.

Erfindungsgemäß wird hierzu ein Spannsystem mit einer Spindel und einem Werkstückhalter vorgeschlagen. Dieses Spannsystem ist insbesondere zur rotativen Bearbeitung eines durch den Werkstückhalter gehaltenen Werkstücks vorgesehen.

Der Werkstückhalter weist einen Aufnahmebereich zur Aufnahme eines Werkstücks auf. Insbesondere kann ein Gehäuse des Werkstückhalters hierzu einen Futterkörper mit einer konischen Klemmbackenaufnahme aufweisen, in der zwei oder mehr Klemmbacken entlang einer Mittelachse und radial aufeinander zu und voneinander weg bewegbar sind. Die Klemmbacken, die vorzugsweise in Form eines radial zusammendrückbaren Klemmbackenrings vorgesehen sind, definieren zwischen sich den Aufnahmebereich und können durch die radiale Verlagerung ein Werkstück hier einspannen und lösen. Vorzugsweise sind mindestens drei radial verlagerbare Klemmbacken vorgesehen.

Die Spindel ist zur Anbringung des Werkstückhalters ausgebildet, wobei die Spindel und der Werkstückhalter über aufeinander zu gerichtete Anlageflächen verfügen. Diese werden beim Ankoppeln des Werkstückhalters an die Spindel aneinandergepresst, insbesondere zum Zwecke der Übertragung hoher Drehmomente.

Zum Zwecke dieses Anpressens ist an der Spindel oder am Werkstückhalter eine Kopplungseinrichtung vorgesehen. Insbesondere vorzugsweise ist die Kopplungseinrichtung an der Spindel vorgesehen. Dies bedeutet, dass bei bestimmungsgemäßer Verwendung im Betrieb nach dem Lösen des Werkstückhalters von der Spindel die Kopplungseinrichtung an der Spindel verbleibt.

Die Kopplungseinrichtung verfügt über einen gegenüber der Anlagefläche axial verlagerbaren Verbindungsabschnitt zur Ankoppelung an die jeweils andere Komponente, also insbesondere an den Werkstückhalter ober aber auch die Spindel. Die Verbindungseinrichtung kann also im Falle einer Ausgestaltung, bei der die Kopplungseinrichtung an der Spindel vorgesehen ist, axial gegenüber der Anlageflächeauf Seite der Spindel verlagert werden. Hierdurch kann je nach Richtung der Bewegung der Werkstückhalter an die Spindel angezogen oder angepresst bzw. anschließend wieder von der Spindel gelöst werden. Die Verbindungseinrichtung ragt vorzugsweise über dieAnlagefläche hinaus.

Die Kopplungseinrichtung umfasst einen ersten Gewindeabschnitt, der axial ortsfest an einem Gehäuse der Spindel bzw. des Werkstückhalters vorgesehen ist. Sie weist darüber hinaus am Verbindungsabschnitt einen zweiten Gewindeabschnitt mit vom ersten Gewindeabschnitt abweichender Gewindesteigung auf. Die beiden Gewindeabschnitte sind vorzugsweise Innengewinde. Sie können als gleichsinnige oder gegensinnige Gewindeabschnitte ausgebildet sein. Vorzugsweise handelt es sich um gleichsinnige Gewindeabschnitte.

Im Eingriff mit beiden Gewindeabschnitten ist eine Differenzgewindehülse, an der ein erstes Gegengewinde und ein zweites Gegengewinde vorgesehen ist. Die beiden Gegengewinde sind vorzugsweise als Außengewinde ausgebildet. Die Gegengewinde befinden sich im Eingriff mit dem ersten Gewindeabschnitt bzw. mit dem zweiten Gewindeabschnitt.

Aufgrund der unterschiedlichen Gewindesteigungen bewirkt eine Rotation der Differenzgewindehülse gegenüber dem Gehäuse der Spindel bzw. des Werkstückhalters sowie gegenüber dem Verbindungsabschnitt eine axiale Verlagerung des Gehäuses und des Verbindungsabschnitts gegeneinander. Um eine Relativdrehbewegung des Verbindungsabschnitts mit dem Gehäuse zu unterbinden oder zu begrenzen, ist der Verbindungsabschnitt vorzugsweise mittels einer Nut und einem darin geführten Nutengleiter am Gehäuse geführt.

Mittels einer Drehung der Differenzgewindehülse kann aufgrund der variierenden Gewindesteigungen eine Axialverlagerung des Verbindungsabschnitts gegenüber der Anlagefläche verursacht werden. Je geringer der Unterschied der Gewindesteigungen ist, desto weniger werden das Gehäuse und der Verbindungsabschnitt je Drehung der Differenzgewindehülse verlagert. Gegenüber einer Gestaltung, bei der nur ein Gewinde mit sehr geringer Steigung vorgesehen ist, hat die erfindungsgemäße Gestaltung den Vorteil, dass Gewinde mit höheren Gewindesteigungen verwendet werden können, die weniger anfällig bei Verschmutzung sind.

Die erfindungsgemäße Gestaltung führt dazu, dass von der Spindel und dem Werkstückhalter nur eine Komponente, vorzugweise die Spindel, mit Gewinden der Kopplungseinrichtung ausgestattet ist. Dies ist wirtschaftlich zweckmäßig, da die Werkstückhalter baulich hierdurch recht einfach und günstig herstellbar sind. Weiterhin ist der Schutz der Kopplungseinrichtung gegen Verschmutzung leichter realisierbar als bei einer Gestaltung, bei der die Gewinde zum Zwecke des Lösens von Spindel und Werkzeughalter voneinander getrennt werden.

Weiterhin gestattet es die erfindungsgemäße Gestaltung, umlaufend durchgängige Gewinde für die Kopplungseinrichtung zu verwenden und in diesen keine von Gewindegängen freie Bajonettsegmente vorsehen zu müssen. Dies gestattet es, beim Ankopplungsvorgang eine Drehung der Differenzgewindehülse um einen größeren Winkel, insbesondere auch um einen Winkel größer 360°, vorzusehen.

Der Verbindungsabschnitt ist zur unmittelbaren Kopplung mit der jeweils anderen Komponente vorgesehen, insbesondere also mit dem Werkstückhalter. Eine mögliche, jedoch nicht bevorzugte Gestaltung sieht vor, dass dabei der Verbindungsabschnitt in den Werkstückhalter eingeschraubt ist. Hierfür ist in diesem Falle eine zusätzliche Gewindeeinrichtung vorgesehen.

Bevorzugt ist hier jedoch eine Bajonettverbindung vorgehen, also eine Verbindung, die durch eine zunächst axiale und dann rotative Relativbewegung gefügt und durch eine gegenläufige rotative und dann eine gegengerichtete axiale Relativbewegung gelöst werden kann.

Die Bajonettverbindung ist vorzugsweise derart ausgestaltet, dass derVerbindungsabschnittzur Ankoppelung an den Werkstückhalter bzw. die Spindel einen ersten Bajonettabschnitt aufweist, und dass an der anderen Komponente, also der Spindel oder insbesondere am Werkstückhalter ein zweiter Bajonettabschnittvorgesehen ist, der mit dem ersten Bajonettabschnitt in oben genannter Weise in Eingriff gebracht und somit gefügt werden kann. Der erste Bajonettabschnitt wird vorzugsweise durch nach innen weisende Bajonettstege am Verbindungsabschnitt gebildet.

Vorzugsweise sind an den Anlageflächen korrespondierende Strukturen vorgesehen, die ein Ankoppeln des Werkstückhalters an die Spindel nur in einer definierten Ausrichtung zulassen. Insbesondere kann an einer Anlagefläche ein Stift und an der anderen Anlagefläche eine korrespondiere Öffnung zur Aufnahme des Stifts vorgesehen sein. Die Öffnung ist dabei vorzugsweise als in Umfangsrichtung erstrecktes Langloch gestaltet, damit der Stift beim Fügen des Bajonetts zunächst in die Öffnung eingeführt wird, um dann beim Verdrehen der Gehäuse des Werkstückhalters und der Spindel innerhalb der Öffnung verlagert zu werden.

Sobald die Verbindung zwischen dem Verbindungsabschnitt und der anderen Komponente, insbesondere dem Werkstückhalter, hergestellt ist, kann nachfolgend mittels der Kopplungseinrichtung der Werkstückhalter an die Spindel herangezogen oder herangedrückt werden, so dass die Anlageflächen aneinandergepresst werden.

Wie erläutert, wird zum Anpressen der Anlageflächen aneinander die Differenzgewindehülse gegenüber dem Gehäuse und gegenüber dem Verbindungsabschnitt gedreht. Hierfür kann das Spannmittel ein Getriebe aufweisen, durch das ein von außen oder über ein Zugorgan eingebrachtes Anpressmoment übersetzt oder untersetzt wird und/oder die Drehrichtung umgewandelt wird.

Vorzugsweise ist jedoch vorgesehen, dass unmittelbar an der Differenzgewindehülse oder koaxial und drehfest zur Differenzgewindehülse eine Spannwerkzeugkontur vorgesehen ist, insbesondere in Form einer Mehrkantstruktur wie einem Innensechskant. Hier kann ein Drehmoment zur Erzeugung der Anpresskraft mittels eines manuellen oder motorbetriebenen Werkzeugs eingebracht werden. In Abhängigkeit der Drehrichtung bewirkt das Drehmoment ein Spannen oder Lösen der Kopplungseinrichtung.

Zum Einspannen und zum Lösen des Werkstücks selbst sind vorzugsweise die bereits beschriebenen Klemmbacken vorgesehen. Diese werden vorzugweise mittels eines parallel zur Mittelachse axial verlagerbaren Zugorgans bewegt. Dieses Zugorgan ist vorzugsweise durch die Differenzgewindehülse zu einem distalen Ende des Spannsystems geführt und wirkt dort zum Zwecke des Einspannens eines Werkstücks vorzugsweise in Form einer Zugkraft auf die Klemmbacken.

Das Zugorgan oder zumindest ein distales Ende des Zugorgans ist vorzugswese drehfest mit der Differenzgewindehülse verbunden. Die Differenzgewindehülse dreht daher stets gemeinsam mit dem distalen Ende des Zugorgans. Zur Drehkopplung des Zugorgans oder zumindest von dessen distalem Ende der Differenzgewindehülse sind vorzugweise eine Nut, insbesondere an einer Innenseite der Differenzgewindehülse, und ein Nutengleiter, insbesondere an einer Außenseite des Zugorgans, vorgesehen.

Durch die Drehkopplung des Zugorgans und der Differenzgewindehülse kann ein Drehmoment zum Spannen und zum Lösen der Kopplungseinrichtung über das Zugorgan eingebracht werden. Dabei sind zum einen Gestaltungen denkbar, bei denen das Zugorgan motorisch durch einen rotativ auf das Zugorgan wirkenden Antriebsmotor gedreht wird, insbesondere einen dauerhaft auf Spindelseite vorgesehenen Motor. Zum anderen kann das Zugorgan oder dessen distales Ende auch zur Ankopplung eines Kopplungswerkzeugs vom distalen Ende aus genutzt werden, indem hier die beschriebene Mehrkantstruktur vorgesehen ist.

Das spindelseitige Zugorgan ist vorzugsweise nicht unmittelbar an den Klemmbacken angebracht. Stattdessen ist bevorzugt an einem distalen Ende des Zugorgans eine Zughülse angekoppelt, die wiederum bezogen auf die Axialrichtung formschlüssig mit den Klemmbacken gekoppelt ist.

Die Zughülse ist mit dem spindelseitigen Zugorgan vorzugsweise mittels einer Bajonettkupplung verbunden. Auf Seite der Klemmbacken weist die Zughülse vorzugsweise einen umlaufenden und nach innen weisenden Zugsteg auf, in den die Klemmbacken eingehängt sind. Vorzugsweise sind die Klemmbacken über elastische Verbindungsabschnitte ringförmig miteinander verbunden. Zum Einhängen eines so gebildeten Klemmbackenrings werden die Klemmbacken elastisch aufeinander zu zusammengedrückt. In diesem radial komprimierten Zustand können dann Zugabschnitte am rückwärtigen Ende der Klemmbacken über den beschriebenen Zugsteg geführt werden. Sobald der Klemmbackenring dann wieder entspannt wird, ist der Formschluss mit der Zughülse hergestellt.

Wie bereits erläutert, ist die beschriebene Kopplungseinrichtung bevorzugt auf der Seite der Spindel vorgesehen. Dies bedeutet, dass die Kopplungseinrichtungan der Spindel verbleibt, wenn der Werkstückhaltervon der Spindel gelöst wird. Da üblicherweise eine Spindel nacheinander mit einer Mehrzahl von Werkstückhaltern Verwendung findet, ist diese Zuordnung der vergleichsweise aufwändigen Kopplungseinrichtung meist von Vorteil. In rein technischer Hinsicht kann die Kopplungseinrichtungjedoch auf der Seite des Werkstückhalters vorgesehen sein. In einem solchen Falle benötigt jeder Werkstückhalter, der mit der gleichen Spindel verwendet wird, eine solche Kopplungseinrichtung. Im Einzelfall kann dies trotz der höheren Kosten zweckmäßig sein.

Die Erfindung betrifft neben dem Spannsystem als Ganzem auch separat eine Spindel und einen Werkstückhalter, wobei die Spindel bzw. der Werkstückhalter mit einer Kopplungseinrichtung der beschriebenen Art ausgerüstet sind und damit zur Ankopplung an ein hieran angepasstes Gegenstück, also einen Werkstückhalter bzw. eine Spindel, ausgebildet sind. Alle in Zusammenhang mit dem Spannsystem erläuterten Aspekte gelten entsprechend auch für eine solche separate Spindel mit Kopplungseinrichtung oder einen solchen separaten Werkstückhalter mit Kopplungseinrichtung.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt eine Schnittdarstellung eines erfindungsgemäßen Spannsystems im gekoppelten Zustand.
Fig. 2 zeigt das Spannsystem in einem nicht gekoppelten Zustand.
Fig. 3 zeigt das Spannsystem in einem nicht gekoppelten Zustand in geschnittener Darstellung.

### DETAILLIERTE BESCHREIBUNG DERAUSFÜHRUNGSBEISPIELE

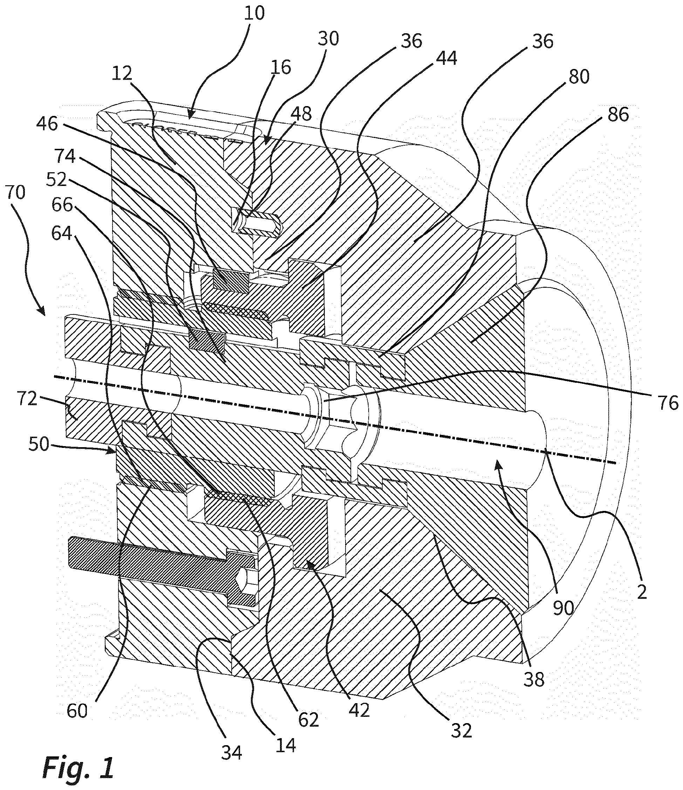

Die Fig. 1 bis 3 zeigen ein erfindungsgemäßes Spannsystem, umfassend eine Spindel 10 und einen Werkstückhalter 30. Bestimmungsgemäß wird die Spindel 10 im Betrieb motorisch um eine Mittelachse 2 in eine Rotationsbewegung versetzt. Hierdurch wird auch der an der Spindel angebrachte Werkstückhalter 30 und mit ihm das hier eingespannte Werkstück in eine rotierende Bewegung versetzt, um das Werkstück dann bearbeiten zu können.

Bestimmungsgemäß ist vorgesehen, dass der Werkstückhalter 30 von der Spindel 10 getrennt werden können soll, beispielsweise um ihn gegen einen anderen Werkstückhalter auszutauschen.

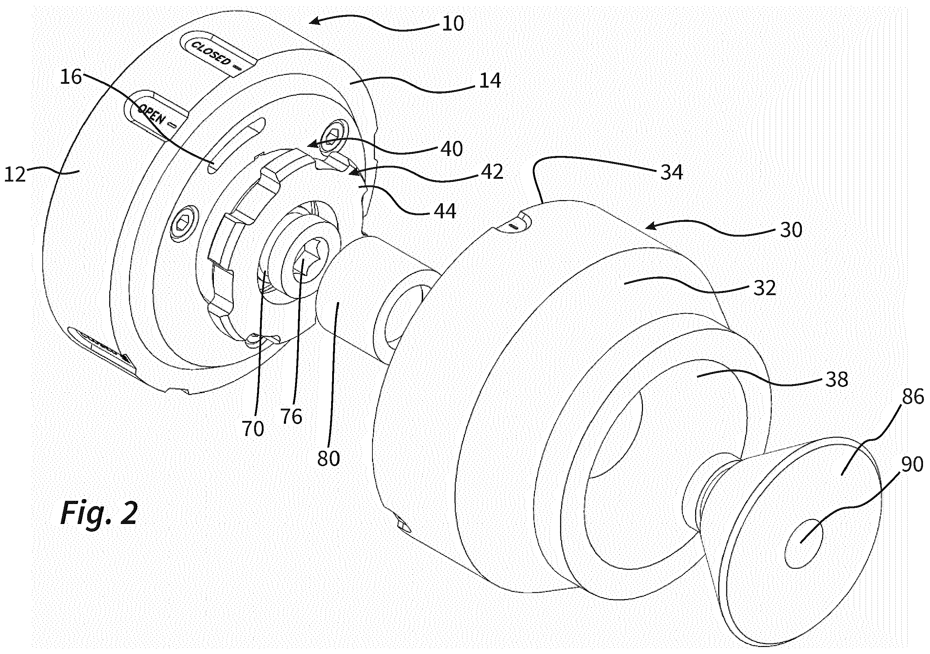

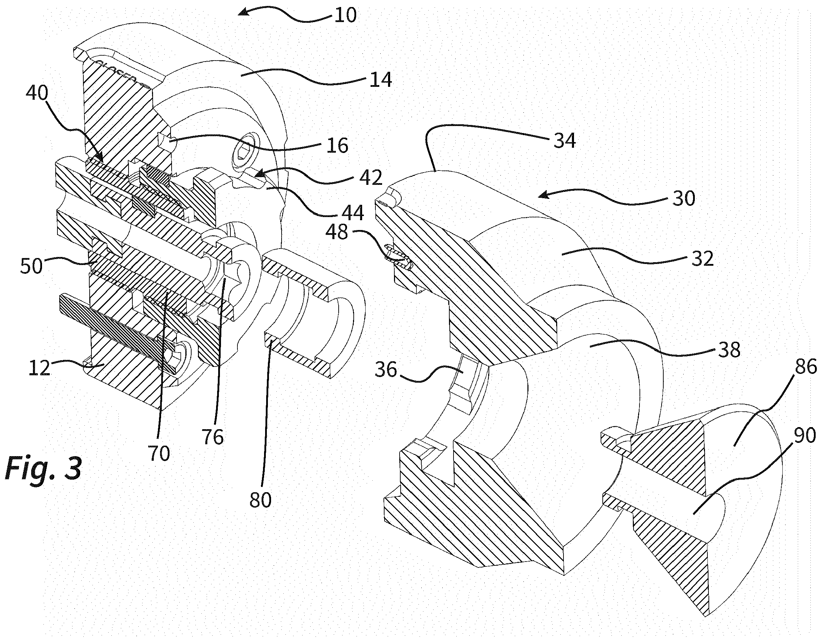

Fig. 1 zeigt das erfindungsgemäße Spannsystem in einem gekoppelten Zustand. Die Fig. 2 und 3 zeigen das Spannsystem der Fig. 1 im zerlegten Zustand.

Im gekoppelten Zustand der Fig. 1 ist der Werkstückhalter 30 und damit auch ein aus drei Klemmbacken 86 bestehender Klemmbackenring an die Spindel 10 angekoppelt, so dass die Übertragung hoher Drehmomente möglich ist. Die Kopplung erfolgt dabei primär über eine Bajonettverbindung der beiden Bajonettabschnitte 36, 44 auf Seiten des Werkstückhalters 30 beziehungsweise auf Seiten der Spindel 10. Dabei ist der Bajonettabschnitt 44 der Spindel 10 Teil einer Kopplungseinrichtung 40, die beim hier vorgestellten Ausführungsbeispiel auf Seiten der Spindel vorgesehen ist. Die Kopplungseinrichtung 40 umfasst einen Verbindungsabschnitt 42, an welchem nach außen weisende Bajonettstege des genannten Bajonettabschnitts 44 vorgesehen sind.

DerVerbindungsabschnitt42 ist gegenüber einem Gehäuse 12 und einerAnlagefläche 14 der spindet 10 in einer Axialrichtung verlagerbar, jedoch mittels eines Nutengleiters 46, der in einer gehäuseseitigen Nut angeordnet ist, drehfest zum Gehäuse 12 geführt. Die Wirkverbindung in axialer Richtung zwischen dem Gehäuse 12 und dem Verbindungsabschnitt 42 wird durch eine Differenzgewindehülse 50 bewirkt. Diese Differenzgewindehülse 50 weist zwei Gegengewinde 64, 66 auf, die sich im Eingriff mit Gewindeabschnitten 60, 62 am Gehäuse 12 und am Verbindungsabschnitt 42 befinden.

Dabei ist die Steigung des Gewindeabschnitts 60 und des Gegengewindes 64 einerseits und die Steigung des Gewindeabschnitts 62 und des Gegengewindes 66 unterschiedlich.

Hierdurch wird bewirkt, dass eine Drehbewegung der Differenzgewindehülse 50 um die Mittelachse 2 zu voneinander abweichenden axialen Verlagerungsstrecken der Differenzgewindehülse 50 gegenüber dem Gehäuse 12 einerseits und gegenüber dem Verbindungsabschnitt 42 andererseits führt. Dies bewirkt, dass die Drehbewegung der Differenzgewindehülse 50 zu einer Verlagerung des Verbindungsabschnitts 42 gegenüber dem Gehäuse 12 und dessen Anlagefläche 14 in axialer Richtung führt.

Die so über die Differenzgewindehülse 50 verursachbare Verlagerung des Verbindungsabschnitts 42 gegenüber dem Gehäuse 12 gestattet es, bei einander hintergreifenden Bajonettabschnitten 36, 44 den Werkstückhalter 30 und dessen Anlagefläche 34 an das Gehäuse 12 und dessen Anlagefläche 14 der Spindel 10 anzupressen beziehungsweise bei gegensinniger Bewegung der Differenzgewindehülse 50 den Werkstückhalter 30 zu lösen, so dass er anschließend durch eine für ein Bajonett übliche Drehbewegung und eine axiale Beabstandung von der Spindel 10 getrennt werden kann.

Innerhalb der Differenzgewindehülse 50 erstreckt sich in axialer Richtung ein Zugorgan 70, vorliegend in Form eines Zugrohres. Im Falle der vorliegenden Gestaltung ist das Zugorgan 70 zweiteilig ausgebildet und weist einen proximalen Teil 72 auf, der axial fest, aber drehbar, an einem Zugadapter 74 angebracht ist. Dieser Zugadapter 74 verfügt an seiner Außenseite über einen Nutengleiter 52, der in einer korrespondierenden Nut der Differenzgewindehülse 50 angeordnet ist. Hierdurch ist eine axial bewegliche, jedoch drehfeste Verbindungzwischen dem Zugadapter 74 und der Differenzgewindehülse 50 geschaffen. Am distalen Ende des Zugadapters 74 befindet sich eine Innensechskantkontur 76, die vom distalen Ende und der dort vorgesehenen Klemmbackenaufnahme 38 des Spannmittels aus zugänglich ist. Mittels eines korrespondierenden Sechskantwerkzeuges kann somit ein Drehmoment in den Zugadapter 74 eingekoppelt werden, welches über den Nutengleiter 52 an die Differenzgewindehülse 50 weitergegeben wird. Hierdurch kann die Drehbewegung erzeugt werden, die in der schon beschriebenen Art und Weise die axiale Verlagerung des Verbindungsabschnitts 42 bewirkt.

Die Hauptfunktion des Zugorgans 70 ist jedoch die Verlagerung der Klemmbacken 86. Hierfür ist das Zugorgan 70 mittels eines Zugadapters 74 mit einer Zughülse 80 verbunden, wobei die Kopplung zwischen dem Zugadapter 74 und der Zughülse 80 insbesondere durch eine in den Figuren nicht dargestellte Bajonettverbindung erfolgt. Das distale Ende der Zughülse 80 wiederum weist einen nach innen weisenden Zugsteg auf, in den die Klemmbacken 86 unter Bildung eines in Axialrichtung wirkenden Formschlusses eingehängt sind. Hierzu ist ergänzend zu erwähnen, dass die Gesamtheit der Klemmbacken 86 in den Figuren als ein Bauteil dargestellt ist. Dies ist lediglich eine zeichnerische Vereinfachung. Tatsächlich handelt es sich um einen Klemmbackenring mit einer Mehrzahl und vorzugsweise mindestens drei ringförmig angeordneten Klemmbacken, die miteinander vorzugsweise über elastisch komprimierbare Verbindungsbereiche verbunden sind. Diese elastische Komprimierbarkeit gestattet es, den Klemmbackenring mittels eines Werkzeugs radial zusammenzudrücken, um ihn in die Zughülse 80 einfügen und dort wieder entspannen zu können.

Anhand der Fig. 2 und 3 ist gut zu erkennen, dass in der Anlagefläche 14 der Spindel 10 eine Öffnung oder Vertiefung 16 vorgesehen ist, die zur Aufnahme eines korrespondierenden Stiftes 48 des Werkstückhalters 30 ausgebildet ist. Hierdurch wird gewährleistet, dass das Ansetzen des Werkstückhalters 30 an die Spindel nur in einer definierten Drehstellung erfolgen kann. Ebenfalls sind in den Fig. 2 und 3 die Bajonettabschnitte 44, 36 auf Seiten der Spindel und des Werkstückhalters gut zu erkennen.

Bei der dargestellten Gestaltung ist die Kopplungseinrichtung 40 auf der Seite der Spindel vorgesehen. Alternativ kann sie jedoch am Werkstückhalter 30 vorgesehen sein. Bezugnehmend auf Fig. 1 wäre bei einer solche Gestaltung vorgesehen, dass die Elemente 40 und 50 im Werkstückhalter 30 vorgesehen wären. Der erste Gewindeabschnitt 60 befindetsich in einem solchen Falle an der Innenseite des Gehäuses 32 des Werkstückhalters 30. DerVerbindungsabschnitt 42 würde sich bei einer solchen Gestaltung über die Anlagefläche 34 des Werkstückhalters 30 in Richtung der Spindel 10 erstrecken. Die Spindel 10 würde zur Ankopplung lediglich über einen gehäusefesten Bajonettabschnitt verfügen.

## Patentansprüche

1. Spannsystem mit einer Spindel (10) und einem Werkstückhalter (30), insbesondere zur rotativen Bearbeitung eines durch den Werkstückhalter (30) gehaltenen Werkstücks, mit den folgenden Merkmalen:
a. der Werkstückhalter (30) weist einen Aufnahmebereich (90) zur Aufnahme eines Werkstücks auf, und
b. die Spindel (10) ist zur Anbringung des Werkstückhalters (30) ausgebildet, wobei die Spindel (10) und der Werkstückhalter (30) überaufeinanderzu gerichtete Anlageflächen (14,34) verfügen,
**gekennzeichnet durch** die folgenden Merkmale:
c. an der Spindel (10) oder am Werkstückhalter (30) ist eine Kopplungseinrichtung (40) vorgesehen, die einen gegenüber der Anlagefläche (14) axial verlagerbaren Verbindungsabschnitt (42) zur Ankoppelung an den Werkstückhalter (30) bzw. die Spindel (10) aufweist, und
d. die Kopplungseinrichtung (40) umfasst einen ersten Gewindeabschnitt (60), der axial ortsfest an einem Gehäuse (12,32) der Spindel (10) bzw. des Werkstückhalters (30) vorgesehen ist, und
e. die Kopplungseinrichtung (40) weist am Verbindungsabschnitt (42) einen zweiten Gewindeabschnitt (62) mit vom ersten Gewindeabschnitt (60) abweichender Gewindesteigung auf, und
f. die Kopplungseinrichtung (40) weist eine Differenzgewindehülse (50) auf, an derein erstes Gegengewinde (64) und ein zweites Gegengewinde (66) vorgesehen sind, wobei das erste Gegengewinde (64) mit dem ersten Gewindeabschnitt (60) im Eingriff steht und wobei das zweite Gegengewinde (66) mit dem zweiten Gewindeabschnitt (62) im Eingriff steht.

2. Spannsystem nach Anspruch 1 mit den folgenden weiteren Merkmalen:
a. der Verbindungsabschnitt (42) weist zur Ankoppelung an den Werkstückhalter (30) bzw. an die Spindel (10) einen ersten Bajonettabschnitt (44) auf, und
b. am Werkstückhalter (30) bzw. an der Spindel (10) ist ein zweiter Bajonettabschnitt (36) vorgesehen, der mit dem ersten Bajonettabschnitt (44) in Eingriff gebracht werden kann, um nachfolgend den Werkstückhalter (30) und die Spindel (10) mittels der Kopplungseinrichtung (40) aneinander anpressen zu können.

3. Spannsystem nach einem der vorstehenden Ansprüche mit dem folgenden weiteren Merkmal:
a. an der Differenzgewindehülse (50) oder drehfest zur Differenzgewindehülse (50) ist eine Spannwerkzeugkontur (76) vorgesehen, mittels derer die Differenzgewindehülse (50) zum Zwecke des Spannens oder zum Lösen der Kopplungseinrichtung (40) momentenbeaufschlagbar ist,
insbesondere mit dem folgenden zusätzlichen Merkmal:
b. die Spannwerkzeugkontur (76) ist in Form einer Innen- oder Außenmehrkantstruktur ausgebildet, insbesondere in Form einer Innensechskantstruktur (76).

4. Spannsystem nach einem der vorstehenden Ansprüche mit den folgenden weiteren Merkmalen:
a. innerhalb der Differenzgewindehülse (50) ist ein Zugorgan (70) axial verlagerbar angeordnet, und
b. das Zugorgan (70) ist drehfest mit der Differenzgewindehülse (50) verbunden,
vorzugsweise mit mindestens einem der folgenden zusätzlichen Merkmale:
c. zur Drehkopplung des Zugorgans (70) und der Differenzgewindehülse (50) sind eine Nut, insbesondere an einer Innenseite der Differenzgewindehülse (50), und ein Nutengleiter (52), insbesondere an einer Außenseite des Zugorgans (70), vorgesehen, und/oder
d. der Verbindungsabschnitt (42) ist drehfest am Gehäuse (12,32) geführt, insbesondere mittels einer Nut und einem Nutengleiter (46).

5. Spannsystem nach einem der vorstehenden Ansprüche mit den folgenden weiteren Merkmalen:
a. der Werkstückhalter (30) weist eine schräggestellte oder konische Klemmbackenaufnahme (38) auf, und
b. der Werkstückhalter weist eine Mehrzahl von Klemmbacken (86) in der Klemmbackenaufnahme (38) auf, die durch axiale Verlagerung gegenüber der Klemmbackenaufnahme (38) aufeinander zu verlagerbar sind,
vorzugsweise mit dem folgenden zusätzlichen Merkmal:
c. es sind mindestens drei Klemmbacken (86) vorgesehen, die durch axiale Verlagerung gegenüber der Klemmbackenaufnahme (38) radial verlagerbar sind.

6. Spannsystem nach einem der vorstehenden Ansprüche mit dem folgenden weiteren Merkmal:
a. zur axialen Verlagerung der Klemmbacken (86) gegenüber der Klemmbackenaufnahme (38) ist ein Zugorgan (70) vorgesehen,
vorzugsweise mit dem folgenden zusätzlichen Merkmal:
b. an das Zugorgan (70) ist eine Zughülse (80) angekoppelt, die zur Anbringung der Klemmbacken (86) vorgesehen ist, wobei die Verbindung zwischen dem Zugorgan (70) und der Zughülse (80) vorzugsweise über eine Bajonettkupplung erfolgt.

7. Spannsystem nach einem der vorstehenden Ansprüche mit dem folgenden weiteren Merkmal:
a. an den Anlageflächen (14, 34) sind korrespondierende Strukturen (16, 48) vorgesehen, die ein Ankoppeln des Werkstückhalters (30) an die Spindel (10) nur in einer definierten Ausrichtung zulassen.

8. Spannsystem nach einem der vorstehenden Ansprüche mit dem folgenden weiteren Merkmal:
a. die Gewindeabschnitte (60, 62) sind als Außengewinde ausgebildet und vorzugsweise axial zueinander versetzt an der Außenseite der Differenzgewindehülse (50) vorgesehen.

9. Spindel (10) zur Ankopplung eines Werkstückhalters (30), insbesondere zur rotativen Bearbeitung eines durch den Werkstückhalter (30) gehaltenen Werkstücks, mit dem folgenden Merkmal:
a. die Spindel (10) ist zur Anbringung des Werkstückhalters (30) ausgebildet, wobei die Spindel (10) hierfür an einem distalen Ende über eine Anlageflächen verfügt,
**gekennzeichnet durch** die folgenden Merkmale:
b. an der Spindel (10) ist eine Kopplungseinrichtung (40) vorgesehen, die über einen gegenüber der Anlagefläche (14) axial verlagerbaren Verbindungsabschnitt (42) zur Ankoppelung an den Werkstückhalter (30) verfügt, und
c. die Kopplungseinrichtung (40) umfasst einen ersten Gewindeabschnitt (60), der axial ortsfest an einem Gehäuse (12, 32) der Spindel (10) vorgesehen ist, und
d. die Kopplungseinrichtung weist am Verbindungsabschnitt einen zweiten Gewindeabschnitt mit vom ersten Gewindeabschnitt abweichender Gewindesteigung auf, und
e. die Kopplungseinrichtung (40) weist eine Differenzgewindehülse (50) auf, die ein erstes Gegengewinde (64) und ein zweites Gegengewinde aufweist, wobei das erste Gegengewinde (64) mit der ersten Gewindeabschnitt (62) im Eingriff und das zweite Gegengewinde (66) mit dem zweiten Gewindeabschnitt (62) im Eingriff steht.

10. Werkstückhalter (30) zur Ankopptung an einerSpindel (10), insbesondere zur rotativen Bearbeitung eines durch den Werkstückhalter (30) gehaltenen Werkstücks, mit den folgenden Merkmalen:
a. der Werkstückhalter (30) weist einen Aufnahmebereich (90) zur Aufnahme eines Werkstücks auf, und
b. der Werkstückhalter (30) ist zur Anbringung an die Spindel (10) ausgebildet, wobei der Werkstückhalter (30) hierfür an seinem proximalen Ende über eine gerichtete Anlagefläche (34) verfügt,
**gekennzeichnet durch** die folgenden Merkmale:
c. am Werkstückhalter (30) ist eine Kopplungseinrichtung (40) vorgesehen, die über einen gegenüber der Anlagefläche (34) axial verlagerbaren Verbindungsabschnitt (42) zur Ankoppelung an die Spindel (10) aufweist, und
d. die Kopplungseinrichtung (40) umfasst einen ersten Gewindeabschnitt (60), der axial ortsfest an einem Gehäuse (12, 32) des Werkstückhalters (30) vorgesehen ist, und
e. die Kopplungseinrichtung (40) weist am Verbindungsabschnitt (42) einen zweiten Gewindeabschnitt (62) mit vom ersten Gewindeabschnitt (60) abweichender Gewindesteigung auf, und
f. die Kopplungseinrichtung (40) weist eine Differenzgewindehülse (50) auf, die ein erstes Gegengewinde (64) und zweites Gegengewinde (66) aufweist, wobei das erste Gegengewinde (64) mit der ersten Gewindeabschnitt (62) im Eingriff und das zweite Gegengewinde (66) mit dem zweiten Gewindeabschnitt (62) im Eingriff steht.
